# FASCICULE DE BREVET EUROPEEN

(11) **EP 3 383 674 B1**
(45) Date de publication et mention de la délivrance du brevet: **04.09.2019**
(21) Numéro de dépôt: 16815623.0
(22) Date de dépôt: 01.12.2016
(51) Int. Cl.: B60C 11/03, B60C 11/11, B60C 11/12, B60C 11/13

(54) **BANDE DE ROULEMENT POUR PNEU HIVERNAL POIDS LOURD**
LAUFFLÄCHE FÜR WINTERREIFEN EINES SCHWERLASTFAHRZEUGS
TREAD FOR HEAVY GOODS VEHICLE WINTER TYRE

(30) Priorité: 03.12.2015 FR 1561822
(43) Date de publication de la demande: 10.10.2018
(73) Titulaire: Compagnie Générale des Etablissements Michelin, 63000 Clermont-Ferrand (FR)
(72) Inventeur: BARDIN, Damien, 63040 Clermont-Ferrand Cedex 9 (FR); MARLIER, Fabien, 63040 Clermont-Ferrand Cedex 9 (FR)
(74) Mandataire: Millanvois, Patrick Jacques Jean
(86) Numéro de dépôt international: PCT/FR2016/053160
(87) Numéro de publication internationale: WO 2017/093669

(56) Documents cités:
- EP-A1- 2 546 080
- WO-A1-2015/003827
- DE-A1- 1 605 638
- JP-A- 2008 260 438

## Description

### DOMAINE DE L'INVENTION

L'invention concerne les bandes de roulement pour pneus et plus particulièrement les dessins de sculpture de ces bandes ainsi que les pneus pourvus de telles bandes dont les performances sont améliorées dans des conditions de roulage hivernal.

### ÉTAT DE LA TECHNIQUE

De façon connue, les pneus pour véhicules poids lourd sont pourvus d'une bande de roulement dont la surface de roulement est destinée à venir en contact avec la chaussée pendant le roulage.

Pour satisfaire aux conditions de roulage sur chaussée revêtue d'eau il est formé dans la bande de roulement de chaque pneu une sculpture selon un dessin adapté, cette sculpture étant générée par des rainures et plus généralement des creux ou cavités et des découpures ayant des profondeurs et des volumes adaptés pour assurer la pérennité des performances tout au long de l'utilisation du pneu jusqu'à sa limite d'usage. Cette limite d'usage est déterminée par les règlementations des pays dans lesquels a lieu le roulage.

Il se trouve que pour assurer un bon comportement des pneus sur sol enneigé, il est nécessaire de compléter le dessin de sculpture avec une pluralité d'incisions, ces incisions générant un grand nombre d'arêtes utiles pour augmenter l'adhérence sur la neige et la glace recouvrant la chaussée en hiver, en affectant le moins possible la rigidité de la bande.

En combinaison avec ces incisions, il est nécessaire de disposer sur la surface de roulement de cavités réalisant le drainage de l'eau pendant le roulage afin d'avoir un bon niveau d'adhérence sur chaussée revêtue d'eau.

Il est connu notamment par la publication WO 2011111394 une bande de roulement d'un pneu pour véhicule poids lourd comportant une pluralité de rainures circonférentielles et de rainures obliques. Ces rainures circonférentielles et ces rainures obliques délimitent plusieurs rangées de blocs de matière. Ces blocs ont une géométrie de contour comprenant une partie convexe et une partie concave, ces deux parties étant séparées selon la direction circonférentielle.

Tous les blocs ont une forme en flèche pouvant être symétrique ou non. Par ailleurs, ce même document prévoit la présence dans chaque bloc d'une pluralité d'incisions parallèles aux rainures obliques délimitant les blocs.

L'objet de l'invention est de proposer un nouveau dessin de sculpture pour bande de roulement de pneu de véhicule poids lourd combinant à la fois une haute efficacité en adhérence sur route en condition hivernale (neige, glace) ainsi qu'une bonne performance sur route revêtue d'eau.

### Définitions :

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Plan médian équatorial : c'est un plan perpendiculaire à l'axe de rotation et passant par les points du pneu radialement les plus éloignés dudit axe. Pour une bande de roulement ce plan divise la bande dans sa largeur en deux moitiés d'égales largeurs.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Une bande de roulement a une épaisseur maximale H de matière à user en roulage ; une fois cette épaisseur atteinte soit le pneu peut être recreusé pour bénéficier de nouvelles rainures soit le pneu est remplacé par un autre pneu neuf. La profondeur des rainures est légèrement supérieure à cette épaisseur de matière à user afin de maintenir un volume minimal de drainage.

Les conditions usuelles de roulage du pneu ou conditions d'utilisation sont celles qui sont définies notamment par la norme E.T.R.T.O. ou toute norme équivalente selon le pays concerné ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

### BREF EXPOSÉ DE L'INVENTION

Selon la présente invention, la bande de roulement, destinée à équiper un pneu pour véhicule poids lourd, a une épaisseur H de matière à user et est destinée à assurer un contact roulant avec une route. Cette bande de roulement comprend :
- au moins deux rainures circonférentielles de profondeur P au moins égale à l'épaisseur H
- une pluralité de rainures obliques en forme de V, chaque rainure oblique comprenant des branches faisant un angle au moins égal à 30° et au plus égal à 60° avec la direction axiale, ces rainures ayant une largeur au moins égale à 5 mm et au plus égale à 12 mm et une profondeur au moins égale à l'épaisseur H,
- les rainures circonférentielles et les rainures obliques délimitant une pluralité de blocs en V sur chaque rangée intermédiaire, c'est à dire tel que chaque bloc comprend une partie convexe et une partie concave.

Un plan P divise chaque bloc en V en deux parties et est défini comme étant perpendiculaire à l'axe de rotation du pneu et passant par les points les plus en avant de la partie convexe de chaque bloc.

Cette bande de roulement est caractérisée en ce que :
- dans chaque bloc en V, et de part et d'autre du plan P divisant chaque bloc en deux parties, il est formé au moins un canal sous la surface de roulement, ce canal ayant une largeur au moins égale à 2 mm et au plus égale à 6 mm et étant destiné à générer une nouvelle rainure après usure partielle prédéterminée, chaque canal comprenant à neuf des ouvertures s'ouvrant dans des rainures obliques, et en ce que
- un pont de matière est formé entre les blocs en V pris deux à deux, ce pont de matière reliant une partie convexe d'un bloc à la partie concave d'un bloc voisin sur une même rangée, ce pont de matière occupant en hauteur et à partir du fond des rainures obliques au moins 40% de la profondeur des rainures obliques et cela sur une largeur au moins égale à 10 mm, ce pont de matière étant approprié pour ne pas fermer les ouvertures des canaux.

Grâce à cette sculpture, une bande de roulement conserve sensiblement un même niveau d'adhérence sur route enneigée pendant au moins 75% de la durée de vie sur usure de la bande de roulement tout en conservant avec l'usure un bon niveau d'adhérence sur chaussée revêtue d'eau par temps de pluie. Cette bande de roulement conserve en outre de bonnes performances en usure et en résistance au roulement.

Le canal formé sous la surface de roulement peut être rectiligne ou de géométrie zigzag. Préférentiellement chaque canal est approprié pour former de nouvelles rainures sur la surface de roulement après une usure comprise entre 20% et 50% d'usure,

Dans une variante de l'invention, au moins un canal formé sous la surface de roulement d'un bloc se prolonge vers la surface de roulement à neuf par une incision dont la largeur est appropriée pour se fermer au moins en partie lors du passage dans le contact avec la route.

Dans une variante particulière, la bande de roulement selon l'invention comprend deux rangées de blocs en V, ces deux rangées étant positionnées dans une région centrale, cette région centrale étant située de part et d'autre du plan médian équatorial, les deux rainures circonférentielles délimitant cette région centrale étant espacées l'une de l'autre d'une distance au plus égale à 70% de la largeur totale de la bande de roulement.

Dans une autre variante intéressante, la bande de roulement est telle que les rainures obliques formées sur les parties intermédiaires sont orientées de manière à générer un dessin de sculpture directionnel, c'est-à-dire présentant un sens de roulage optimal.

Dans une autre variante intéressante, chaque bloc en V est symétrique par rapport au plan P.

Avantageusement chaque canal est prévu pour former une nouvelle rainure entre 20% et 50% d'usure (c'est à dire entre 20% et 50% de l'épaisseur H à user). Dans une variante associée, chaque nouvelle rainure a un fond situé au plus à 75% de l'épaisseur H et se prolonge ensuite par une incision. Préférentiellement, cette incision se prolonge au-delà de la limite d'usure nécessitant le retrait du pneu.

Dans une variante de l'invention chaque bloc comprend en outre au moins une incision oblique en V dans les blocs en forme de flèche, cette au moins une incision oblique en V étant disposée de manière à être parallèle aux rainures obliques. La profondeur de ces incisions obliques en V étant au moins égale à 50% de l'épaisseur de matière à user H.

Selon une autre variante de l'invention, la bande de roulement comprend une rainure centrée sur le plan médian équatorial et au moins deux rangées de blocs en forme de flèche de part et d'autre de ce plan médian équatorial, les blocs d'une rangée étant orientés dans une direction tandis que ses voisins sont orientés dans la direction opposée.

Le pontage entre les blocs d'une même rangée est approprié dimensionnellement pour laisser libres les ouvertures des canaux dans les rainures obliques. Avantageusement la hauteur des pontages mesurée par rapport au fond des rainures obliques est appropriée pour que ces pontages s'étendent au moins sur toute la profondeur des canaux.

Les bords de la bande de roulement, c'est à dire les parties axialement les plus à l'extérieur de la bande de roulement, peuvent être continues ou rainurées. Préférentiellement, elles sont dépourvues de blocs en V.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 montre une vue d'une première variante non directionnelle d'une bande de roulement selon l'invention ;
La figure 2 montre une coupe dans un plan dont la trace est indiquée par la ligne II-II sur la figure 1,
La figure 3 montre une deuxième variante directionnelle d'une bande de roulement selon l'invention.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

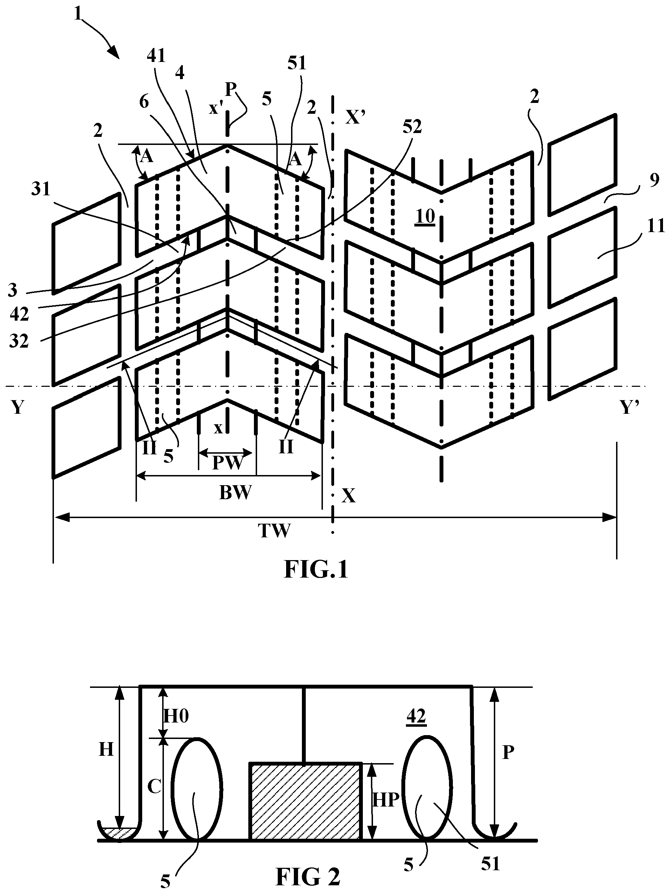

La figure 1 montre une vue d'une première variante non directionnelle d'une bande de roulement selon l'invention.

Dans cette variante, la bande de roulement 1 d'un pneu pour véhicule poids lourd de dimension 365/65 R 22.5 comprend trois rainures principales circonférentielles 2 de largeur 13.5 mm et de profondeur totale P égale à 14.6 mm. Cette bande de roulement 1 a une largeur TW égale à 306mm et une épaisseur H de matière à user égale à 13mm (cette épaisseur est inférieure à la profondeur totale P des rainures afin de conserver un volume approprié de drainage jusqu'à la limite en usure).

Ces rainures principales 2, dont une est centrée sur le plan médian équatorial dont la trace est indiquée par la ligne XX', divisent la bande de roulement en deux rangées intermédiaires I et deux rangées de bord B, ces dernières limitant axialement la bande.

Sur chaque rangée intermédiaire I, des rainures transversales obliques 3 sont réalisées en forme de V de façon à délimiter avec les rainures principales circonférentielles 2 une pluralité de blocs 4 ayant une forme en flèche c'est à dire en forme de V. Chaque bloc 4 comprend une face convexe 41 et une face concave 42, ces deux faces étant séparées l'une de l'autre dans la direction circonférentielle (c'est à dire dans la direction XX').

Les rainures transversales obliques 3 ont une largeur égale à 8mm et une profondeur totale égale à la profondeur P des rainures principales. Chaque rainure transversale oblique 3 en V comprend deux branches 31, 32 inclinées chacune d'un angle de 45 degrés par rapport à la direction axiale et ayant même longueur. Chaque bloc 4 est symétrique par rapport à un plan P perpendiculaire à l'axe de rotation du pneu (dont la direction est indiquée par la ligne YY') et passant par les points les plus en avant de la partie convexe 41 de chaque bloc 4, ce plan P divisant dans le cas présent le bloc en deux parties égales.

La largeur BW de chaque bloc 4 mesurée dans la direction axiale est égale à 85 mm. Cette bande de roulement est telle que dans chaque bloc 4 en V et dans chaque partie séparée par le plan P, il est formé au moins un canal 5 sous la surface de roulement 10 à neuf, ce canal 5 ayant une largeur égale à 4.5 mm et étant destiné à générer une nouvelle rainure après usure partielle prédéterminée, dans le cas présent égale à 25% d'usure (c'est à dire 25% de la hauteur H de matière à user). Chaque canal 5 comprend des ouvertures 51, 52 s'ouvrant dans les rainures obliques 3. Dans le cas présent l'orientation des canaux 5 est parallèle au plan médian équatorial XX'. Bien entendu, les canaux 5 auraient pu être construits de manière à être orientés perpendiculairement aux faces des blocs 4.

En outre, un pont de matière 6 est formé entre les blocs 4 en V pris deux à deux, ce pont de matière 6 reliant une partie convexe 41 d'un bloc 4 à la partie concave 42 d'un bloc voisin sur une même rangée I.

Les blocs 4 de l'autre rangée intermédiaire I sont disposés de manière à ce que le dessin de sculpture ne soit pas directionnel et donc n'impose pas une direction de rotation préférentielle.

Les bords B de la bande de roulement sont pourvus d'une pluralité de rainures axiales 9 délimitant des blocs 11 de géométrie rectangulaire.

La figure 2 montre une coupe selon une surface à deux plans dont la trace est indiquée par la ligne brisée II-II sur la figure 1. Sur cette figure 2 on voit une partie de la face concave 42 d'un bloc 4 en V reliée par un pont de matière 6 au bloc voisin. Ce pont de matière 6 occupe une hauteur HP mesurée à partir du fond des rainures obliques 3 égale à 6.2mm et cela sur une largeur PW mesurée dans la direction axiale égale à 18 mm. Ce pont de matière 6 s'étend entre les ouvertures 51 des canaux 5. Le fond des canaux 5 est approprié pour que les nouvelles rainures formées par ces canaux soient encore présentes lorsque la limite d'usure est atteinte. Les canaux 5 forment des nouvelles rainures après une usure H0, dans le cas présent égale à 3.25mm.

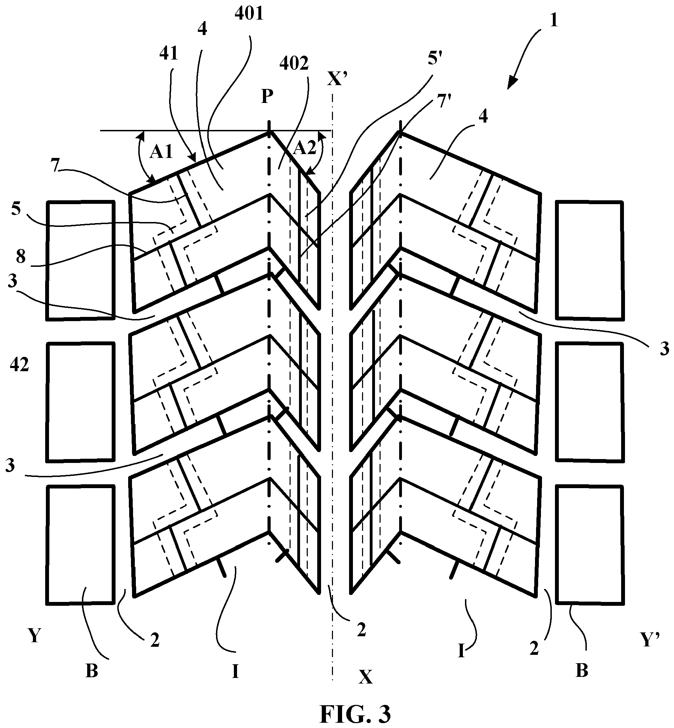

La figure 3 montre une deuxième variante directionnelle d'une bande de roulement 1 selon l'invention. Par variante directionnelle, on entend que le dessin de la sculpture de la bande de roulement de par sa géométrie peut imposer une direction préférentielle de roulage. Cette variante directionnelle, comporte trois rainures principales circonférentielles 2 délimitant deux rangées intermédiaires I et des régions de bord B.

Sur chaque rangée intermédiaire I, des rainures transversales obliques 3 sont réalisées en forme de V de façon à délimiter avec les rainures principales circonférentielles 2 une pluralité de blocs 4 ayant une forme en flèche c'est à dire en forme de V. Chaque bloc 4 comprend une première branche 401 et une deuxième branche 402 ; la branche 401 axialement la plus à l'intérieur est inclinée selon un angle moyen A1 (égal ici à 30°) tandis que la branche 402 est inclinée selon un angle moyen A2 (égal ici à 45°).

Chaque bloc 4 comprend une face convexe 41 et une face concave 42, ces deux faces étant séparées l'une de l'autre dans la direction circonférentielle (c'est à dire dans la direction indiquée par la ligne XX').

Les rainures transversales obliques 3 ont une largeur égale à 8mm et une profondeur totale égale à la profondeur P des rainures principales. Chaque bloc 4 est dissymétrique par rapport à un plan P passant par les points les plus en avant de la partie convexe de chaque bloc 4 (ce plan est indiqué par sa trace xx' dans le plan de la figure 3, ce plan étant perpendiculaire à l'axe de rotation du pneu dont la direction est indiquée par la ligne YY'). Ce plan P divise le bloc 4 en deux parties inégales.

La largeur BW de chaque bloc 4 mesurée dans la direction axiale est égale à 85 mm. Cette bande de roulement est telle que dans chaque bloc 4 en V, il est formé dans la partie axialement extérieur du bloc par rapport à au plan P un premier canal 5 sous la surface de roulement 10 à neuf, ce canal 5 ayant une largeur égale à 4.5 mm et étant destiné à générer une nouvelle rainure après usure partielle prédéterminée, dans le cas présent égale à 25% d'usure. D'autre part, il est également formé dans l'autre partie du bloc 4 un second canal 5' de même dimension que le canal 5. Dans le cas présent, le canal 5 formé dans la partie du bloc axialement la plus large a une géométrie en zigzag et comprend deux ouvertures dans les rainures transversales obliques. Dans l'autre partie, le canal 5' est orienté principalement en direction circonférentielle.

En outre, chaque canal 5, 5' est prolongé radialement vers la surface de roulement à neuf par une incision 7, 7' respectivement, chaque incision ayant une largeur appropriée pour pouvoir se fermer au moins partiellement lors du passage dans le contact avec la route pendant le roulage.

De plus chaque bloc 4 comprend une incision 8 ayant même orientation que les rainures transversales obliques 3, cette incision 8 étant située à équidistance des faces convexe et concave du bloc 4. Cette incision 8 a une largeur également appropriée pour se fermer au moins partiellement lors du passage dans le contact avec la route pendant le roulage. Cette incision 8 comprend dans le cas présent une partie commune avec l'incision 7 surmontant radialement un canal.

Dans une variante non représentée ici, l'incision 8 peut elle-même être prolongée par un canal sous la surface de roulement, ce canal étant destiné à former une nouvelle rainure après une usure partielle prédéterminée (identique ou non à l'usure partielle à partir de laquelle les canaux 5 forment de nouvelles rainures).

En outre, un pont de matière 6 est formé entre les blocs 4 en V pris deux à deux dans une même rangée intermédiaire, ce pont de matière 6 reliant une partie convexe d'un bloc à la partie concave d'un bloc voisin sur une même rangée et étant approprié en dimensions pour laisser libres les ouvertures des canaux 5 et 5'.

Les blocs 4 des rangées intermédiaires I sont disposés avec une même orientation de manière à ce que le dessin de sculpture soit directionnel et donc puisse imposer une direction de rotation préférentielle indiquée par exemple par un indicateur sur les bords de la bande de roulement (flèche F sur la figure 3).

Les bords B de la bande de roulement sont pourvus d'une pluralité de rainures axiales 9 délimitant des blocs 11 de géométrie rectangulaire.

L'invention décrite ici à l'aide de deux variantes ne saurait bien sûr être limitée à ces seules variantes et diverses modifications peuvent y être apportées sans sortir du cadre tel que défini par les revendications.

## Revendications

1. Bande de roulement (1) pour pneu de véhicule poids lourd, cette bande de roulement ayant une épaisseur H de matière à user et destinée à assurer un contact roulant avec une route, cette bande de roulement comprenant :
- au moins deux rainures circonférentielles (2) de profondeur P au moins égale à l'épaisseur H, ces rainures circonférentielles (2) délimitant au moins une rangée intermédiaire (I) et deux rangées de bords (B) délimitant axialement la bande de roulement,
- une pluralité de rainures obliques (3) en forme de V, chaque rainure oblique (3) comprenant des branches (31, 32) faisant un angle au moins égal à 30° et au plus égal à 60° avec la direction axiale, ces rainures obliques (3) ayant une largeur au moins égale à 5 mm et au plus égale à 12 mm et une profondeur au moins égale à l'épaisseur H,
- les rainures circonférentielles (2) et les rainures obliques (3) délimitant une pluralité de blocs en V sur chaque rangée intermédiaire, c'est à dire tel que chaque bloc comprend une partie convexe et une partie concave,
- un plan P divisant chaque bloc en V en deux parties et étant défini comme perpendiculaire à l'axe de rotation du pneu et passant par les points les plus en avant de la partie convexe de chaque bloc, cette bande de roulement étant **caractérisée en ce que** :
- dans chaque bloc (4) en V, et de part et d'autre du plan P divisant chaque bloc en deux parties, il est formé au moins un canal (5) sous la surface de roulement, ce canal (5) ayant une largeur au moins égale à 2 mm et au plus égale à 6 mm et étant destiné à générer une nouvelle rainure après usure partielle prédéterminée, chaque canal (5) comprenant à neuf des ouvertures (51, 52) s'ouvrant dans des rainures obliques (3), et **en ce que**
- un pont de matière (6) est formé entre les blocs (4) en V pris deux à deux, ce pont de matière reliant une partie convexe d'un bloc (5) à la partie concave d'un bloc voisin sur une même rangée intermédiaire, ce pont de matière (6) occupant en hauteur et à partir du fond des rainures obliques au moins 40% de la profondeur des rainures obliques et cela sur une largeur au moins égale à 10 mm, ce pont de matière (6) étant approprié pour ne pas fermer les ouvertures (51, 52) des canaux (5).

2. Bande de roulement selon la revendication 1 **caractérisée en ce que** chaque canal (5) est prévu pour former une nouvelle rainure après une usure comprise entre 20% et 50% de la hauteur H de matière à user.

3. Bande de roulement selon la revendication 1 ou la revendication 2 **caractérisée en ce que** chaque canal (5) formé sous la surface de roulement d'un bloc (4) en V se prolonge vers la surface de roulement à neuf par une incision (7) dont la largeur est appropriée pour se fermer au moins en partie lors du passage dans le contact avec la route.

4. Bande de roulement selon l'une des revendications 1 à 3 **caractérisée en ce que** chaque bloc (4) en V est symétrique par rapport au plan P.

5. Bande de roulement selon l'une des revendications 1 à 4 **caractérisée en ce qu'**elle comprend deux rangées intermédiaire de blocs en V, ces deux rangées étant positionnées dans une région centrale, cette région centrale étant située de part et d'autre du plan médian équatorial, les deux rainures circonférentielles (2) délimitant cette région centrale étant espacées l'une de l'autre d'une distance au plus égale à 70% de la largeur totale TW de la bande de roulement.

6. Bande de roulement selon l'une des revendications 1 à 5 **caractérisée en ce que** chaque canal (5) a un fond situé au plus à 75% de l'épaisseur H et se prolonge ensuite vers l'intérieur par une incision.

7. Bande de roulement selon l'une des revendications 1 à 6 **caractérisée en ce que** chaque bloc (4) comprend au moins une incision oblique (8) en V dans les blocs (4) en V, cette au moins une incision oblique (8) en V étant disposée de manière à être parallèle aux rainures obliques (3), la profondeur de ces incisions obliques en V étant au moins égale à 50% de l'épaisseur H de matière à user.

8. Bande de roulement selon l'une des revendications 1 à 7 **caractérisée en ce que** comprend une rainure centrée sur le plan médian équatorial et au moins deux rangées intermédiaire de blocs en V de part et d'autre de ce plan médian équatorial, les blocs d'une rangée étant orientés dans une direction tandis que les blocs de la rangée voisine sont orientés dans la direction opposée.

9. Bande de roulement selon l'une des revendications 1 à 7 **caractérisée en ce que** les rainures obliques formées sur les parties intermédiaires sont orientées de manière à générer un dessin de sculpture directionnel, c'est-à-dire présentant un sens de roulage optimal.

10. Bande de roulement selon l'une des revendications 1 à 9 **caractérisée en ce que** les bords (B) de la bande de roulement, c'est à dire les parties axialement les plus à l'extérieur de la bande de roulement, sont dépourvus de blocs en V.

## Patentansprüche

1. Laufstreifen (1) für einen Lkw-Winterreifen, wobei dieser Laufstreifen eine abzunutzende Materialdicke H hat und dazu bestimmt ist, einen Rollkontakt mit einer Straße zu gewährleisten, wobei dieser Laufstreifen umfasst:
- mindestens zwei Umfangsrillen (2) mit einer Tiefe P, die mindestens gleich der Dicke H ist, wobei diese Umfangsrillen (2) mindestens eine Zwischenreihe (I) begrenzen und zwei Randreihen (B) den Laufstreifen axial begrenzen,
- eine Vielzahl von V-förmigen Schrägrillen (3), wobei jede Schrägrille (3) Schenkel (31, 32) umfasst, die einen Winkel von mindestens 30° und höchstens 60° mit der axialen Richtung bilden, wobei diese Schrägrillen (3) eine Breite von mindestens 5 mm und höchstens 12 mm und eine Tiefe, die mindestens gleich der Dicke H ist, aufweisen,
- wobei die Umfangsrillen (2) und die Schrägrillen (3) eine Vielzahl von V-Blöcken in jeder Zwischenreihe bilden, d. h. dass jeder Block einen konvexen Teil und einen konkaven Teil umfasst,
- wobei eine Ebene P jeden V-Block in zwei Teile teilt und als Senkrechte zur Rotationsachse des Reifens definiert ist und durch die am weitesten vorne liegenden Punkte des konvexen Teils jedes Blocks verläuft, wobei dieser Laufstreifen **dadurch gekennzeichnet ist, dass**:
- in jedem V-Block (4) und beidseits der Ebene P, die jeden Block in zwei Teile teilt, mindestens ein Kanal (5) unter der Lauffläche gebildet ist, wobei dieser Kanal (5) eine Breite von mindestens 2 mm und höchstens 6 mm hat und dazu bestimmt ist, nach einer vorbestimmten teilweisen Abnutzung eine neue Rille zu erzeugen, wobei jeder Kanal (5) im Neuzustand Öffnungen (51, 52) umfasst, die sich in Schrägrillen (3) öffnen, und dadurch, dass
- eine Materialbrücke (6) zwischen den paarweise genommenen V-Blöcken (4) gebildet ist, wobei diese Materialbrücke einen konvexen Teil eines Blocks (5) mit einem konkaven Teil eines Nachbarblocks in derselben Zwischenreihe verbindet, wobei diese Materialbrücke (6) in der Höhe und ausgehend vom Boden der Schrägrillen mindestens 40 % der Tiefe der Schrägrillen einnimmt, und dies über eine Breite von mindestens 10 mm, wobei diese Materialbrücke (6) geeignet ist, die Öffnungen (51, 52) der Kanäle (5) nicht zu verschließen.

2. Laufstreifen nach Anspruch 1, **dadurch gekennzeichnet, dass** jeder Kanal (5) dazu vorgesehen ist, nach einer Abnutzung zwischen 20 % und 50 % der abzunutzenden Materialhöhe H eine neue Rille zu bilden.

3. Laufstreifen nach Anspruch 1 oder Anspruch 2, **dadurch gekennzeichnet, dass** sich jeder unter der Lauffläche eines V-Blocks (4) gebildete Kanal (5) im Neuzustand zur Lauffläche hin durch einen Einschnitt (7) verlängert, dessen Breite geeignet ist, um sich beim Übergang zum Kontakt mit der Straße mindestens teilweise zu schließen.

4. Laufstreifen nach einem der Ansprüche 1 bis 3, **dadurch gekennzeichnet, dass** jeder V-Block (4) zur Ebene P symmetrisch ist.

5. Laufstreifen nach einem der Ansprüche 1 bis 4, **dadurch gekennzeichnet, dass** er zwei Zwischenreihen aus V-Blöcken umfasst, wobei diese beiden Reihen in einem zentralen Bereich angeordnet sind, wobei dieser zentrale Bereich beidseits der äquatorialen Mittelebene gelegen ist, wobei die beiden diesen zentralen Bereich begrenzenden Umfangsrillen (2) voneinander um höchstens 70 % der Gesamtbreite TW des Laufstreifens beabstandet sind.

6. Laufstreifen nach einem der Ansprüche 1 bis 5, **dadurch gekennzeichnet, dass** jeder Kanal (5) einen Boden hat, der bei höchstens 75 % der Dicke H gelegen ist und sich anschließend nach innen hin durch einen Einschnitt verlängert.

7. Laufstreifen nach einem der Ansprüche 1 bis 6, **dadurch gekennzeichnet, dass** jeder Block (4) mindestens einen schrägen V-Einschnitt (8) in den V-Blöcken (4) umfasst, wobei dieser mindestens eine schräge V-Einschnitt (8) so angeordnet ist, dass er parallel zu den Schrägrillen (3) verläuft, wobei die Tiefe dieser schrägen V-Einschnitte mindestens 50 % der abzunutzenden Materialdicke H beträgt.

8. Laufstreifen nach einem der Ansprüche 1 bis 7, **dadurch gekennzeichnet, dass** eine Rille umfasst, die auf die äquatorialen Mittelebene zentriert ist, und mindestens zwei Zwischenreihen aus V-Blöcken beidseits dieser äquatorialen Mittelebene umfasst, wobei die Blöcke einer Reihe in eine Richtung ausgerichtet sind, während die Blöcke der Nachbarreihe in die entgegengesetzte Richtung ausgerichtet sind.

9. Laufstreifen nach einem der Ansprüche 1 bis 7, **dadurch gekennzeichnet, dass** die auf den Zwischenteilen gebildeten Schrägrillen so ausgerichtet sind, dass sie eine richtungsgebundene Profilierung erzeugen, d. h. eine optimale Laufrichtung aufweisen.

10. Laufstreifen nach einem der Ansprüche 1 bis 9, **dadurch gekennzeichnet, dass** die Ränder (B) des Laufstreifens, d. h. die axial am weitesten außen gelegenen Teile des Laufstreifens, nicht mit V-Blöcken versehen sind.

## Claims

1. Tread (1) for a tyre for a heavy goods vehicle, this tread having a thickness H of wearing material and intended to provide rolling contact with a road surface, this tread comprising:
- at least two circumferential grooves (2) of depth P at least equal to the thickness H, these circumferential grooves (2) delimiting at least one intermediate row (I) and two edge rows (B) axially delimiting the tread,
- a plurality of V-shaped oblique grooves (3), each oblique groove (3) comprising branches (31, 32) making an angle at least equal to 30° and at most equal to 60° with the axial direction, these oblique grooves (3) having a width at least equal to 5 mm and at most equal to 12 mm and a depth at least equal to the thickness H,
- the circumferential grooves (2) and the oblique grooves (3) delimiting a plurality of V-shaped blocks in each intermediate row, that is to say such that each block comprises a convex part and a concave part,
- a plane P dividing each V-shaped block into two parts and being defined as being perpendicular to the axis of rotation of the tyre and passing through the forward-most points of the convex part of each block, this tread being **characterized in that**:
- in each V-shaped block (4), and on either side of the plane P that divides each block into two parts, there is formed at least one canal (5) below the tread surface, this canal (5) having a width at least equal to 2 mm and at most equal to 6 mm and being intended to generate a new groove after a predetermined amount of partial wear, each canal (5) when new comprising openings (51, 52) that open into the oblique grooves (3), and **in that**
- a bridge of material (6) is formed between the V-shaped blocks (4) considered in twos, this bridge of material connecting a convex part of one block (5) to the concave part of an adjacent block in the same intermediate row, this bridge of material (6) occupying heightwise and from the bottom of the oblique grooves at least 40% of the depth of the oblique grooves and doing so over a width at least equal to 10 mm, this bridge of material (6) being suitable for not closing the openings (51, 52) of the canals (5).

2. Tread according to Claim 1, **characterized in that** each canal (5) is intended to form a new groove after wear representing between 20% and 50% of the height H of wearing material.

3. Tread according to Claim 1 or Claim 2, **characterized in that** each canal (5) formed below the tread surface of a V-shaped block (4) is extended towards the tread surface when new by a sipe (7) the width of which is suited to at least partially closing up on itself as it comes into contact with the road surface.

4. Tread according to one of Claims 1 to 3, **characterized in that** each V-shaped block (4) is symmetrical with respect to the plane P.

5. Tread according to one of Claims 1 to 4, **characterized in that** it comprises two intermediate rows of V-shaped blocks, these two rows being positioned in a central region, this central region being situated on each side of the equatorial mid-plane, the two circumferential grooves (2) delimiting this central region being spaced apart by a distance at most equal to 70% of the total width TW of the tread.

6. Tread according to one of Claims 1 to 5, **characterized in that** each canal (5) has a bottom situated at most at 75% of the thickness H and is then extended inwards by a sipe.

7. Tread according to one of Claims 1 to 6, **characterized in that** each block (4) comprises at least one V-shaped oblique sipe (8) in the V-shaped blocks (4), this at least one V-shaped oblique sipe (8) being arranged in such a way as to run parallel to the oblique grooves (3), the depth of these V-shaped oblique sipes being at least equal to 50% of the thickness H of wearing material.

8. Tread according to one of Claims 1 to 7, **characterized in that** comprises a groove centred on the equatorial mid-plane and at least two intermediate rows of V-shaped blocks on either side of this equatorial mid-plane, the blocks of one row being oriented in one direction while the blocks of the neighbouring row are oriented in the opposite direction.

9. Tread according to one of Claims 1 to 7, **characterized in that** the oblique grooves formed on the intermediate parts are oriented so as to create a directional tread pattern, namely one that has an optimal direction of running.

10. Tread according to one of Claims 1 to 9, **characterized in that** the edges (B) of the tread, namely the axially outermost parts of the tread, do not have V-shaped blocks.
